# EUROPEAN PATENT SPECIFICATION

(11) **EP 4 287 408 B1**
(45) Date of publication and mention of the grant of the patent: **18.03.2026**
(21) Application number: 23173263.7
(22) Date of filing: 12.05.2023
(51) Int. Cl.: H01R 4/64, H02B 1/16, H01R 4/30, H01R 9/26, H02B 1/052

(54) **GROUNDING DEVICE FOR GROUNDING A DIN MODULAR COMPONENT IN A POSITION OF USE AND ASSEMBLY OF A GROUNDING DEVICE AND A DIN MODULAR COMPONENT**
ERDUNGSVORRICHTUNG ZUR ERDUNG EINES MODULAREN DIN-BAUTEILS IN EINER GEBRAUCHSPOSITION UND ANORDNUNG MIT EINER ERDUNGSVORRICHTUNG UND EINEM MODULAREN DIN-BAUTEIL
DISPOSITIF DE MISE À LA TERRE POUR LA MISE À LA TERRE D'UN COMPOSANT MODULAIRE DIN DANS UNE POSITION D'UTILISATION ET ENSEMBLE COMPRENANT UN DISPOSITIF DE MISE À LA TERRE ET UN COMPOSANT MODULAIRE DIN

(30) Priority: 30.05.2022 NL 2032020
(43) Date of publication of application: 06.12.2023
(73) Proprietor: Alfen N.V., 1332 AM Almere (NL)
(72) Inventor: TEN CATE, ERIC, 7876 AB Valthermond (NL)
(74) Representative: Mink-Lindenburg, Charlotte Hildegard

(56) References cited:
- CN-U- 208 570 982
- CN-U- 209 675 637
- JP-A- 2009 026 663
- JP-A- 2011 216 365
- JP-A- 2014 011 141
- JP-A- 2017 112 007
- JP-U- H0 352 967

## Description

The invention relates to a grounding device for a DIN modular component, such as a fuse holder, miniature circuit breaker, residual current circuit breaker, switch, current circuit breaker or other switching equipment arranged for mounting on a DIN rail.

Such a DIN modular component is in a position of use mounted on a DIN rail and connected to an electrical cable or installation wire by means of at least one connecting screw, which is present on the DIN modular component. During maintenance work on a DIN modular component in a position of use, the DIN modular component needs to be grounded. An example of a grounding device is for instance known from document JP H03 52967 U. The present invention aims to provide a universally applicable grounding device for this purpose which is defined by claim 1.

The grounding device according to the invention hereto comprises connecting means for establishing an electrical connection with the connecting screw, wherein the grounding device further comprises a grounding cable for connection to grounding equipment and wherein the connecting means are electrically conductively connected to the grounding cable, wherein the grounding device comprises gripping means for gripping onto the electrical cable on the underside of the DIN modular component and/or on the DIN rail.

The inventive connecting means make the grounding device according to the invention universally suitable for detachable electrical coupling with various types of DIN modular components. By means of the inventive gripping means, the grounding device can be mechanically coupled to the fixed world near the underside of the DIN modular component.

In an optimal preferred embodiment of the grounding device according to the invention, the gripping means comprise a hook. The hook can be arranged easily and quickly without risk of damaging the DIN modular component, the electrical cable and/or the DIN rail.

In the grounding device according to the invention, the connecting means comprise a contact element for contact with the connecting screw and operating means for setting the position of the contact element. The adjustable position ensures a correct and safe electrical connection.

The grounding device according to the invention comprises a housing, wherein the contact element is arranged moveably in the housing and the contact element comprises a pressure pin which, in one or more adjustable positions, protrudes at least partly from the housing. The pressure pin can be appropriately fitted into a recess present around the connecting screw on the DIN modular component. Preferably, the pressure pin is provided with a contact surface for contact with the connecting screw, wherein the contact surface at least partly has a concave shape. This ensures optimum contact with the head of the connecting screw.

In a more detailed elaboration thereof, the housing comprises a first contact plane for contact with the DIN modular component, wherein the first contact plane has a through opening for the pressure pin. According to a further elaboration, the housing comprises a second contact plane for contact with the DIN modular component, wherein the second contact plane is at an angle to the first contact plane, preferably substantially a right angle. Every known DIN modular component is provided at the front side and the underside with such an angle near the connecting screw and the connected electrical cable. The grounding device according to the invention can quickly be placed in the right position against the DIN modular component due to the complementary shaped angles.

In an exceptionally reliable preferred embodiment of the grounding device according to the invention, the operating means are provided with a slip clutch. The slip clutch ensures that sufficient pressure is applied to the contact element after maximum tightening with which the electrical connection is guaranteed. The slip clutch also prevents damaging of the DIN modular component.

In a practical preferred embodiment of the grounding device according to the invention, the operating means comprise a set screw.

The invention will be explained in more detail using the following figures, wherein:
Figure 1 shows a schematic view of a preferred embodiment of the grounding device according to the invention for a fuse holder;
Figure 2 shows a schematic view of the grounding device from figure 1, coupled to a fuse holder;
Figure 3 shows a schematic view of the fuse holder from figure 2;
Figure 4 shows a part of figure 2 of the grounding device with parts broken away;
Figure 5 shows the grounding device from figure 4 in more detail;
Figure 6 shows a part of figure 5 in exploded view; and
Figure 7 shows a schematic view of an alternative preferred embodiment of the grounding device according to the invention for a fuse holder.

Similar reference numbers in different figures refer to similar parts.

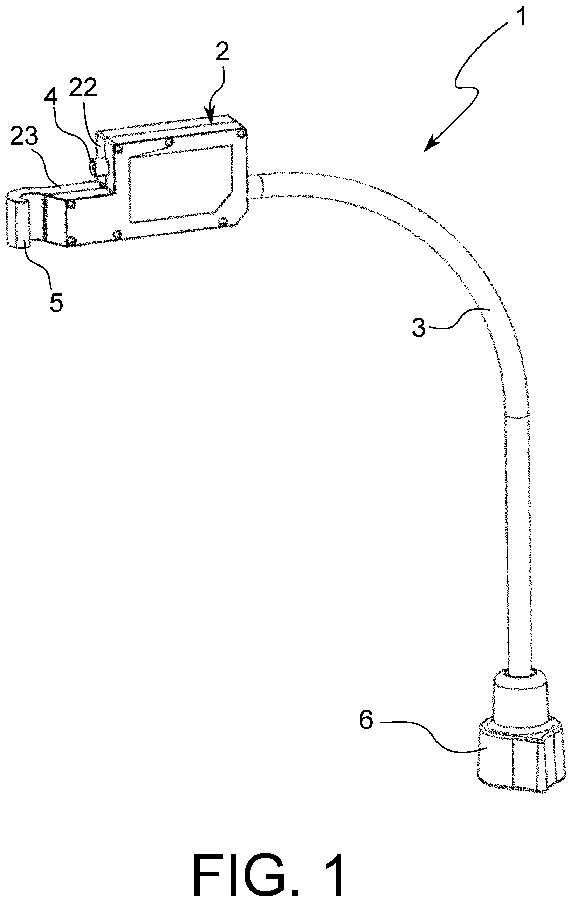

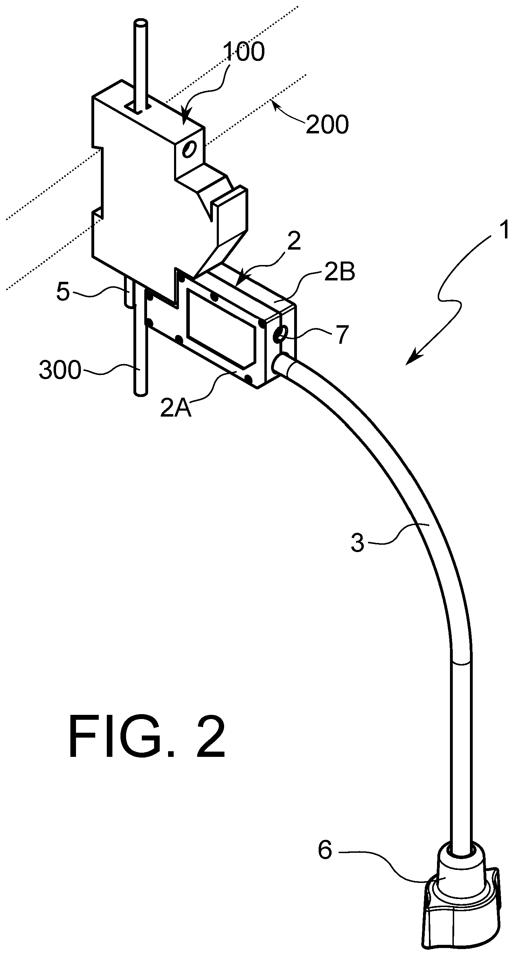

Figure 1 shows a preferred embodiment of grounding device 1 for a fuse holder according to the invention. Figure 2 shows the grounding device 1 coupled to a fuse holder 100. The fuse holder 100 is arranged for attachment to a DIN rail 200, which is schematically shown in figure 2. The grounding device 1 comprises an electrically insulated housing 2 for placement against the fuse holder and a grounding cable 3 that is connectable to grounding equipment. In the shown preferred embodiment, the grounding cable is thereto provided with a suitable connection interface 6.

The housing 2 comprises a first and second housing part (2A; 2B). The grounding device 1 comprises connecting means for establishing an electrically conductive connection with a connecting screw on the fuse holder 100. The connecting means thereto comprise a contact element 4, of which the position can be adjusted by means of operating means 7. The contact element 4 is electrically conductively connected to the grounding cable 3. The connecting means are arranged in the housing 2.

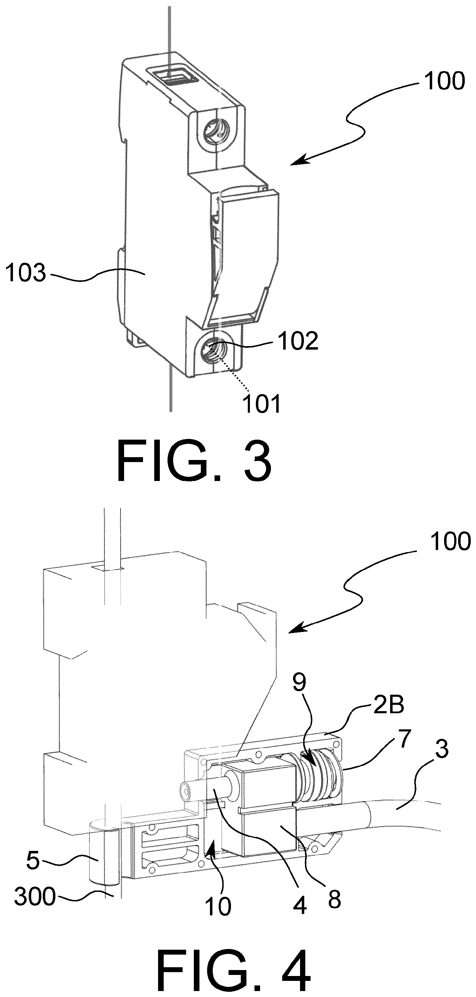

Figure 3 shows an example of a fuse holder 100 on which the grounding device 1 can be coupled. The fuse holder 100 has a box shaped housing 103, which is provided with a hole 101 on a front side near the underside in which a connecting screw 102 is recessed. The underside of the housing 103 comprises a passage for connection for an electrical cable or installation wire 300. The connecting screw 103 is conductively connected with the aforementioned connection. The shown fuse holder 100 is a fuse holder for a cylindrical fuse.

Figure 4 shows the grounding device 1 in connected state to the fuse holder 100, wherein the housing part 2A has been omitted. The grounding device 1 further comprises gripping means for gripping onto an electrical cable 300 coming out of the fuse holder 100. The housing 2 thereto comprises a hook 5 on a first outer end that can be hooked around the electrical cable 300 by an installer. The contact element 4 is provided with a pressure pin. The operating means 7 for setting the position of the pressure pin 4 preferably comprise a set screw 7. After hooking the hook 5 around the electrical cable 300, the pressure pin 4 can be placed against the connecting screw 101 using the set screw 7.

The housing 2 comprises a first contact plane 22 for contact with the fuse holder. The first contact plane 22 has a through opening for the pressure pin 4. The housing 2 has a second contact plane 23 for contact with the fuse holder, which is at an angle to the first contact plane, preferably substantially a right angle. The hook 5 is arranged adjacently to the second contact plane 23.

The contact element thereto further comprises a body 8, on which the pressure pin 4 is arranged and to which also an outer end of the grounding cable 3 is connected. The body 8 is arranged moveably in the longitudinal direction of the housing 2 in an area 10 of the housing 2 in which the body is moveable by means of the set screw 7. Various guiding elements that are arranged on an inner side of the area 10 reduce the resistance experienced by the body 9 when moving in the housing 2. Furthermore, the guiding elements ensure a straight move of the body 8 in the housing 2.

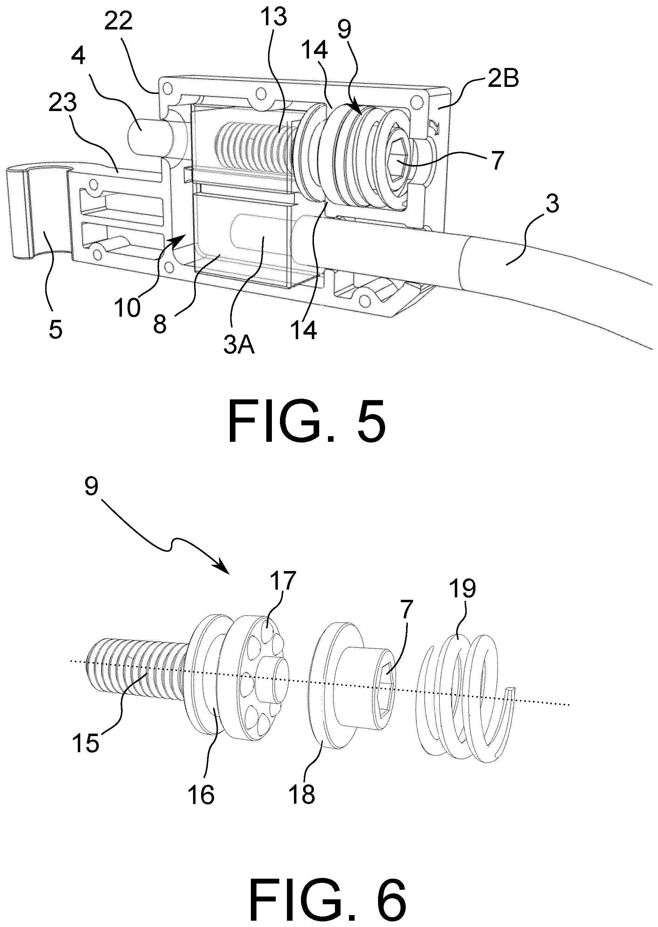

Figure 5 illustrates the operation of the operating means for changing the position of the pressure pin 4. In the body 8, internal thread 13 is arranged on the side that is turned away from the pressure pin 4. The operating means further comprise a bolt 15 that cooperates with the internal thread 13. The head of the bolt 15 comprises a cylindrical area 16 that cooperates with a cylindrical area 14 in the housing 2. When rotating the bolt 15, the body will because of this move itself in the area 10, while the bolt 15 stays in the same position in the housing 2.

The set screw 7 is connected to the bolt 15 by means of a slip clutch 9. The slip clutch makes sure that the bolt 15 can be tightened maximally with a predetermined force, such that the pressure force that the pressure pin 4 can exert on the connecting screw 103 is limited.

Figure 6 shows the operation of the slip clutch 9 of the grounding device 1. The slip clutch 9 comprises:
multiple first concave recesses that are arranged in the upper side of the head of the bolt 15; multiple second concave recesses (not shown) that have been arranged in a backside 18 of the set screw 7, which second recesses correspond with the first concave recesses;
balls 17, which have each been placed between a first and second concave recess;
and a compression spring 19, which has been placed between the housing 2 and the set screw 7, because of which the balls 7 are enclosed between the head of the bolt 15 and the backside of the set screw 7.

When tightening the set screw 7, the bolt 15 with tighten with it. If the pressure pin 4 is laying against the set screw 13, the bolt 15 will experience more and more resistance with further tightening. If this resistance becomes bigger than the spring force that the compression spring 19 is exerting on the set screw 7, the set screw 7 will start to rotate over the balls 17 while the bolt 15 stays stationary.

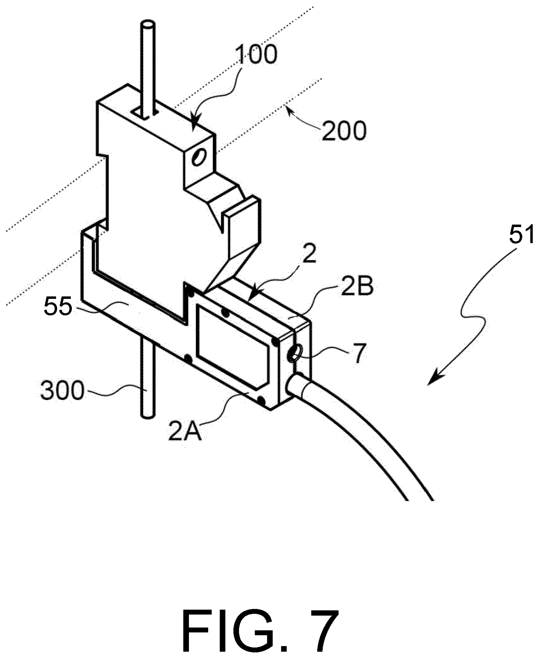

Figure 7 shows a schematic view of an alternative preferred embodiment of the grounding device for a fuse holder according to the invention. The grounding device 51 differs from grounding device 1 with relation to the gripping means 55, which are arranged for mechanical gripping onto the fuse holder 100 and/or onto the DIN rail 200. In the shown alternative preferred embodiment, the gripping means comprise an alternative hook 55.

In both preferred embodiments, the width of the grounding device according to the invention corresponds with the width of the DIN modular component, such that adjacent DIN modular components on a DIN rail can each be coupled with a separate grounding device according to the invention.

The present invention is based on the insight of providing a universal grounding device that fits onto many, if not all, known DIN modular components.

Needless to say, the invention is not limited to the described and shown preferred embodiment that fits onto the shown fuse holder 100.

The invention can additionally be used on other switching equipment intended for mounting on a DIN rail, such as miniature circuit breakers, residual current circuit breakers, switches or current circuit breakers. The invention generally extends to any embodiment that falls within the scope of protection, as defined in the claims.

## Claims

1. Grounding device (1; 51) for grounding a DIN modular component (100) in a position of use, wherein in the position of use the DIN modular component is fixed on a DIN rail (200) and is connected to an electrical cable by means of at least one connecting screw (102) of the DIN modular component, wherein the grounding device comprises connecting means (4) for establishing an electrical connection with the connecting screw, wherein the grounding device further comprises a grounding cable (3) for connection to grounding equipment and wherein the connecting means (4) are electrically conductively connected to the grounding cable (3), wherein the grounding device comprises gripping means (5; 55) for gripping onto the electrical cable on the underside of the DIN modular component and/or on the DIN rail, wherein the connecting means comprise a contact element (4), **characterized in that** the connecting means comprise operating means (7) for setting the position of the contact element, wherein the contact element has a body (8), on which a pressure pin (4) is arranged for contact with the connecting screw (102),
an outer end of the grounding cable (3) is connected to the body (8),
and the grounding device comprises a housing (2), wherein the body (8) is arranged moveably in longitudinal direction of the housing by the operating means (7) and the pressure pin (4) at least partly protrudes from the housing.

2. Grounding device (1; 51) according to claim 1, wherein the gripping means comprise a hook (5; 55).

3. Grounding device (1; 51) according to claim 1 or 2, wherein the pressure pin (4) is provided with a contact surface for contact with the connecting screw (102), wherein the contact surface at least partly has a concave shape.

4. Grounding device (1; 51) according to one or more of the preceding claims, wherein the housing (2) comprises a first contact plane (22) for contact with the DIN modular component (100), wherein the first contact plane has a through opening for the pressure pin.

5. Grounding device (1; 51) according to claim 4, wherein the housing (2) comprises a second contact plane (23) for contact with the DIN modular component (100), wherein the second contact plane is at an angle to the first contact plane (22), preferably substantially a right angle.

6. Grounding device (1; 51) according to claim 5 referring to claim 2, wherein the hook (5; 55) is arranged adjacent to the second contact plane (23).

7. Grounding device (1; 51) according to one or more of the preceding claims, wherein the operating means (7) are provided with a slip clutch (9).

8. Grounding device (1; 51) according to one or more of the preceding claims, wherein the operating means comprise a set screw (7).

9. Assembly of a grounding device (1; 51) according to one or more of the preceding claims and a DIN modular component, wherein the DIN modular component is a fuse holder (100), automatic circuit breaker, earth leakage circuit breaker, switch or circuit breaker.

## Patentansprüche

1. Erdungsvorrichtung (1; 51) zur Erdung eines modularen DIN-Bauteils (100) in einer Gebrauchsposition, wobei das modulare DIN-Bauteil in der Gebrauchsposition auf einer DIN-Schiene (200) befestigt und mittels mindestens einer Verbindungsschraube (102) des modularen DIN-Bauteils mit einem elektrischen Kabel verbunden ist, wobei die Erdungsvorrichtung Verbindungsmittel (4) zum Herstellen einer elektrischen Verbindung mit der Verbindungsschraube umfasst, wobei die Erdungsvorrichtung ferner ein Erdungskabel (3) zur Verbindung mit einer Erdungsanlage umfasst und wobei die Verbindungsmittel (4) elektrisch leitend mit dem Erdungskabel (3) verbunden sind, wobei die Erdungsvorrichtung Greifmittel (5; 55) zum Greifen des elektrischen Kabels an der Unterseite des modularen DIN-Bauteils und/oder an der DIN-Schiene umfasst, wobei die Verbindungsmittel ein Kontaktelement (4) umfassen, **dadurch gekennzeichnet, dass**
die Verbindungsmittel Betätigungsmittel (7) zum Einstellen der Position des Kontaktelements umfassen, wobei das Kontaktelement einen Körper (8) aufweist, an dem ein Druckstift (4) zum Kontakt mit der Verbindungsschraube (102) angeordnet ist,
ein äußeres Ende des Erdungskabels (3) mit dem Körper (8) verbunden ist,
und die Erdungsvorrichtung ein Gehäuse (2) umfasst, wobei der Körper (8) durch das Betätigungsmittel (7) in Längsrichtung des Gehäuses beweglich angeordnet ist und der Druckstift (4) zumindest teilweise aus dem Gehäuse herausragt.

2. Erdungsvorrichtung (1; 51) nach Anspruch 1, wobei die Greifmittel einen Haken (5; 55) umfassen.

3. Erdungsvorrichtung (1; 51) nach Anspruch 1 oder 2, wobei der Druckstift (4) mit einer Kontaktoberfläche zum Kontakt mit der Verbindungsschraube (102) versehen ist, wobei die Kontaktoberfläche zumindest teilweise eine konkave Form aufweist.

4. Erdungsvorrichtung (1; 51) nach einem oder mehreren der vorhergehenden Ansprüche, wobei das Gehäuse (2) eine erste Kontaktebene (22) zum Kontakt mit dem modularen DIN-Bauteil (100) umfasst, wobei die erste Kontaktebene eine Durchgangsöffnung für den Druckstift aufweist.

5. Erdungsvorrichtung (1; 51) nach Anspruch 4, wobei das Gehäuse (2) eine zweite Kontaktebene (23) zum Kontakt mit dem modularen DIN-Bauteil (100) umfasst, wobei die zweite Kontaktebene in einem Winkel zu der ersten Kontaktebene (22) steht, vorzugsweise im Wesentlichen in einem rechten Winkel.

6. Erdungsvorrichtung (1; 51) nach Anspruch 5 unter Bezugnahme auf Anspruch 2, wobei der Haken (5; 55) benachbart zu der zweiten Kontaktebene (23) angeordnet ist.

7. Erdungsvorrichtung (1; 51) nach einem oder mehreren der vorhergehenden Ansprüche, wobei die Betätigungsmittel (7) mit einer Rutschkupplung (9) versehen sind.

8. Erdungsvorrichtung (1; 51) nach einem oder mehreren der vorhergehenden Ansprüche, wobei die Betätigungsmittel eine Stellschraube (7) umfassen.

9. Baugruppe aus einer Erdungsvorrichtung (1; 51) nach einem oder mehreren der vorhergehenden Ansprüche und einem modularen DIN-Bauteil, wobei das modulare DIN-Bauteil ein Sicherungshalter (100), ein automatischer Leistungsschutzschalter, ein Fehlerstromschutzschalter, ein Schalter oder ein Leistungsschalter ist.

## Revendications

1. Dispositif de mise à la terre (1 ; 51) pour la mise à la terre d'un composant modulaire DIN (100) dans une position d'utilisation, dans lequel, dans la position d'utilisation, le composant modulaire DIN est fixé sur un rail DIN (200) et est connecté à un câble électrique au moyen d'au moins une vis de connexion (102) du composant modulaire DIN, dans lequel le dispositif de mise à la terre comprend un moyen de connexion (4) pour établir une connexion électrique avec la vis de connexion, dans lequel le dispositif de mise à la terre comprend en outre un câble de mise à la terre (3) pour une connexion à de l'équipement de mise à la terre et dans lequel le moyen de connexion (4) est électriquement connecté au câble de mise à la terre (3), dans lequel le dispositif de mise à la terre comprend un moyen de préhension (5 ; 55) pour une préhension du câble électrique sur la face inférieure du composant modulaire DIN et/ou sur le rail DIN, dans lequel le moyen de connexion comprend un élément de contact (4), **caractérisé en ce que** le moyen de connexion comprend un moyen d'actionnement (7) pour régler la position de l'élément de contact, dans lequel l'élément de contact présente un corps (8), sur lequel une broche de pression (4) est agencée pour un contact avec la vis de connexion (102),
une extrémité extérieure du câble de mise à la terre (3) est connectée au corps (8),
et le dispositif de mise à la terre comprend un boîtier (2), dans lequel le corps (8) est agencé de manière mobile dans la direction longitudinale du boîtier par le moyen d'actionnement (7) et la broche de pression (4) fait au moins partiellement saillie du boîtier.

2. Dispositif de mise à la terre (1 ; 51) selon la revendication 1, dans lequel le moyen de préhension comprend un crochet (5 ; 55).

3. Dispositif de mise à la terre (1 ; 51) selon la revendication 1 ou 2, dans lequel la broche de pression (4) est dotée d'une surface de contact pour un contact avec la vis de connexion (102), dans lequel la surface de contact présente au moins partiellement une forme concave.

4. Dispositif de mise à la terre (1 ; 51) selon une ou plusieurs des revendications précédentes, dans lequel le boîtier (2) comprend un premier plan de contact (22) pour un contact avec le composant modulaire DIN (100), dans lequel le premier plan de contact présente une ouverture traversante pour la broche de pression.

5. Dispositif de mise à la terre (1 ; 51) selon la revendication 4, dans lequel le boîtier (2) comprend un second plan de contact (23) pour un contact avec le composant modulaire DIN (100), dans lequel le second plan de contact se situe selon un angle par rapport au premier plan de contact (22), de préférence sensiblement un angle droit.

6. Dispositif de mise à la terre (1 ; 51) selon la revendication 5 en référence à la revendication 2, dans lequel le crochet (5 ; 55) est agencé de manière adjacente au second plan de contact (23).

7. Dispositif de mise à la terre (1 ; 51) selon une ou plusieurs des revendications précédentes, dans lequel le moyen d'actionnement (7) est doté d'un embrayage à glissement (9).

8. Dispositif de mise à la terre (1 ; 51) selon une ou plusieurs des revendications précédentes, dans lequel le moyen d'actionnement comprend une vis de réglage (7).

9. Ensemble d'un dispositif de mise à la terre (1 ; 51) selon une ou plusieurs des revendications précédentes et d'un composant modulaire DIN, dans lequel le composant modulaire DIN est un porte-fusible (100), un disjoncteur automatique, un disjoncteur de fuite à la terre, un commutateur ou un disjoncteur.
